# NEUE EUROPÄISCHE PATENTSCHRIFT

(11) **EP 0 787 543 B2**
(45) Veröffentlichungstag und Bekanntmachung des Hinweises auf die Entscheidung über den Einspruch: **02.02.2005**
(45) Hinweis auf die Patenterteilung: 12.12.2001
(21) Anmeldenummer: 97810042.8
(22) Anmeldetag: 29.01.1997
(51) Int. Cl.: B21C 23/01, B21C 33/00, B21C 35/04

(54) **Verfahren zum Strangpressen eines Profils od. dgl. Körpers aus einem Barren sowie Vorrichtung dafür**
Method for extruding profiles or the like from bars and device therefore
Procédé d'extrusion de profilés ou analogues à partir de matériaux en barre et appareil à cet effet

(30) Priorität: 05.02.1996 DE 19603853
(43) Veröffentlichungstag der Anmeldung: 06.08.1997
(73) Patentinhaber: Alcan Technology & Management AG, 8212 Neuhausen am Rheinfall (CH)
(72) Erfinder: Wömpner, Diethelm, 78351 Bodman-Ludwigshafen (DE); Ames, Adolf, 78247 Hilzingen-Duchtlingen (DE); Hodel, Ulf, 78234 Engen (DE); Rotzinger, Gregor, 78224 Singen-Friedingen (DE)
(74) Vertreter: Hiebsch, Gerhard F., Dipl.-Ing.

(56) Entgegenhaltungen:
- DE-A- 3 003 311
- DE-B- 1 076 064
- FR-A- 1 229 992
- PATENT ABSTRACTS OF JAPAN vol. 017, no. 503 (M-1478), 10.September 1993 & JP 05 131214 A (SHOWA ALUM CORP), 28.Mai 1993,
- PATENT ABSTRACTS OF JAPAN vol. 018, no. 314 (M-1621), 15.Juni 1994 & JP 06 071334 A (UBE IND LTD), 15.März 1994,

## Beschreibung

Die Erfindung betrifft ein Verfahren zum Strangpressen eines Profils od.dgl. Körpers aus einem Barren, der in einer Rezipientenbohrung eines Aufnehmers geführt und mittels eines Preßstempels in Preßrichtung durch einen Formquerschnitt eines Formwerkzeuges gepreßt wird. Zudem erfaßt die Erfindung eine dafür besonders geeignete Vorrichtung mit zummidest einer über die Mündung des Formwerkzeugs quer zur Preßrichtung bewegbaren Trenneinrichtung (stehe z.B. DE-A-3 003 311).

Beim Strangpressen wird der duktil gewordene Werkstoff eines -- im Metallbereich etwa aus Bunt-, Sintermetallen oder Stahl, aber insbesondere aus einer Aluminiumlegierung vorgeformten -- erwärmten Gußbarrens oder Walzstababschnittes von einem Stempel -- oder beim hydrostatischen Strangpressen mittels einer Flüssigkeit -- durch einen oder mehrere Formquerschnitt/e eines die Preßrichtung querenden Formwerkzeuges gepreßt. Beim direkten oder Vorwärtsstrangpressen bewegt sich der Stempel in Richtung des Ablaufes des entstehenden Profils auf den Formquerschnitt zu, beim indirekten oder Rückwärts-Strangpressen wird der Werkstoff gegen die Stempelrichtung durch ein Werkzeug gedrückt, das am hohlen Stempel festgelegt ist.

Ist beispielsweise beim direkten Strangpressen die Stirn des Stempels in Preßrichtung an das Formwerkzeug herangekommen, so verbleibt zwischen beiden an der hinteren Werki zeugfläche ein sog. Preßrest des verpreßten Barrens als mehr oder minder scheibenartiges Gebilde. Dieses wird üblicherweise durch ein radial am Werkzeug bewegtes Schermesser entfernt, bevor der nachfolgende Barren -- von dem inzwischen zurückgefahrenen Stempel im Aufnehmer verschoben -- an jene Werkzeugfläche schlägt und der eigentliche Formvorgang fortgesetzt werden kann.

Metallbarren, insbesondere solche aus Aluminiumlegierungen, sind mit Verunreinigung -- beispielsweise Schmierstoffresten -- sowie mit einer Oxidschicht überzogen. Vor allem die Oxidpartikel an der Barrenstirn haben sich als äußerst schädlich für das Gefüge des entstehenden Profils erwiesen; die durch sie entstehende Zone mit verunreinigenden Einschlüssen ist -- in Abhängigkeit von Profilform und Preßgeschwindigkeit -verhältnismäBig lang und zwingt bei zunehmenden Qualitätsanforderungen dazu, immer längere Profilabschnitte als Abfall aus dem entstehenden Strang herauszunehmen - mit allen sich daraus ergebenden Folgen abnehmender Wirtschaftlichkeit bei schrumpfendem Profilausstoß. Zahlreiche Versuche, diese Mängel zu beseitigen, blieben erfolglos.

Die JP 05 13 214 A beschreibt eine Vorrichtung zum Strangpressen eines Profiles od.dgl. Körpers aus einem Barren, der in einer Rezipientenbohrung eines Aufnehmers geführt und mittels eines Preßstempels in Preßrichtung einem Formquerschnitt eines Formwerkzeuges zugeführt wird. Nach der dem Formwerkzeug zugekehrten Rezipientenstim des Aufnehmers ist eine über die Mündung der Rezipientenbohrung führbare Schere als Trenneinrichtung vorgesehen, mit der ein bei Unterbrechung des Preßvorganges von jener Rezipientenstim abstehender Bereich des Barrens abgetrennt werden kann.

Auch der DE 30 03 311 A1 ist eine Schneidvorrichtung für eine Presse zum direkten Strangpressen von Metallpreßbolzen zu entnehmen, welche den in einem Aufnehmer nach dem Strangpressen des nutzbaren Teils des Preßbolzens zurückbleibenden Preßrest abschneidet und so vom stranggepreßten Erzeugnis trennt; es wird als Trenneinrichtung eine ebene Schneide mittels Antriebsmitteln an Führungsorganen in einer zur Strangpreßachse senkrechten Richtung zwischen einer von Strangpreßdüse und Erzeugnis radial entfernten Ruhestellung während des Strangpressens und einer Trennstellung bewegt, wobei Führungsorgane und Antriebsmittel zum Verschieben der Schneide sowie zur Kraftübertragung auf diese von einem jene Strangpreßdüse tragenden Gleitstück gehalten sind.

In Kenntnis dieser Gegebenheiten hat sich der Erfinder das Ziel gesetzt, die beim Strangpressen insbesondere von Aluminiumlegierungen auftretenden Verunreinigungsbereiche am Übergang zweier benachbarter Blöcke oder Barren zu unterbinden.

Zur Lösung dieser Aufgabe führt die Lehre der unabhängigen Patentansprüche; die Unteransprüche geben günstige Ausgestaltungen an.

Erfindungsgemäß wird vor Eintritt des vorderen Barrenendes in den Formquerschnitt zuerst dieser Barren angestaucht und in Preßrichtung um ein geringes KragmaB -- von beispielsweise 10 mm -- aus dem Aufnehmer geschoben, wonach ein dabei entstehender scheibenartiger Abschnitt jenes freien Barrenendes abgeschert und entfernt sowie letzteres anschlieBend an den Formquerschnitt bzw. das hintere Ende des entstandenen Profils gebracht wird.

Durch das Entfernen dieses Frontabschnitts wird auch dessen Oxidhaut beseitigt, so daß -- ein schnelles Anschlagen der nun jungfräulichen Barrenstirn am Werkzeug vorausgesetzt -- Verunreinigungen durch Oxidpartikel dieser Barrenstirn ebensowenig befürchtet werden müssen wie das Entstehen längerer Abfallabschnitte in einem Profilstrang.

Um die Zeit zwischen Schervorgang und Beginn des Weiterpressens zu vermeiden, soll das Entfernen der Barrenstirn bevorzugt zeitgleich mit dem üblichen Abscheren des Preßrestes vom Werkzeug erfolgen. Hierzu sollen letzteres und der Aufnehmer am Ende eines Preßvorganges axial relativ voneinander weg bewegt werden; sind ihre benachbarten Stirnflächen zueinander fixiert, kann der Schervorgang für Preßrest und Barren beginnen.

Von besonderer Bedeutung ist das erfindungsgemäße Abscheren der neuen Barrenstirn beim Herstellen eines Profils, dessen Querschnitt wenigstens teilweise größer ist als jener des Barrens selbst. Mittels der sog. Spreadertechnologie wird aus einem Barren geringen Durchmessers ein großes und breites Profil gepreßt, indem der Barrenwerkstoff in einer Vorkammer vor dem eigentlichen Formquerschnitt über den Querschnittsumriß des Barrens erweitert in vorbestimmten Bereichen gegebenenfalls innerhalb jenes Querschnittsumrisses auf einen engen Querschnitt verringert wird.

Die erfindungsgemäße Vorrichtung, mit der das beschriebene Verfahren durchgeführt werden kann, zeichnet sich dadurch aus, daß an der dem Formwerkzeug zugekehrten Rezipientenstirn des Aufnehmers als Trenneinrichtung ein Schermesser mit zwei Scherklingen vorgesehen ist; dessen eine Scherklinge quer über die Mündung der Rezipientenbohrung sowit die andere Scherklinge über Stirnfläche des Formwerkzeuges geführt werden. Dazu ist die zeitweilige Fixierung des an sich axial bewegbaren Aufnehmers an der radialen Bewegungsbahn des Schermessers vorteilhaft.

Wie bereits erwähnt, soll der Zeitraum zwischen dem Entfernen der werkzeugseitigen Barrenstirn sowie das Anschlagen der Schnittfläche am Ende des entstehenden Profils so kurz wie möglich gehalten werden. Um dies zu erreichen, soll der Abstand zwischen den benachbarten Stirnflächen von Aufnehmer einerseits und Formwerkzeug anderseits fixiert werden können; in den so entstehenden Spalt exakt vorbestimmter Weite wird dann ein Schermesser mit zwei Scherklingen eingefahren, die gleichzeitig den Preßrest des verarbeiteten Barrens am Werkzeug und die Barrenstirn des Folgebarrens entfernen. Diese Werkstoffscheiben können dann einem Schmelzprozeß zugeführt und -- in diesem Arbeitsgang von den schädlichen Oxidpartikeln befreit -- erneut der Produktion zugeleitet werden. Dank dieser Maßnahmen werden die Stilltsandszeiten zwischen zwei Preßvorgängen -- bei gleichzeitigem Entfernen der vorderen Oxidschicht des dann zu verpressenden Barrens -- minimiert.

Nach einem weiteren Merkmal der Erfindung ist der Abstand der beiden Scherklingen des Schermessers einstellbar; so wird dessen Anpassung im Falle einer etwa durch Abtasten mit Laserstrahl festgestellten Abweichung der Spaltweite möglich.

An der Rezipientenstirn können vorteilhafterweise Führungen für das Schermesser vorgesehen sein - dies vor allem dann, wenn von der Rezipientenstirn in an sich bekannter Weise ein ringförmiger Mündungsabschnitt einer im Aufnehmer ruhenden Rezipientenbüchse abragt.

Als weitergehende Verbesserung ist anzusehen, dem Spalt zwischen Formwerkzeug und Aufnehmer eine quer zur Preßrichtung in den Spalt einfahrbare sowie rückstellbare Distanzeinrichtung zuzuordnen, an die Formwerkzeug und Aufnehmer anlegbar sind. Damit soll eine schnelle und problemlose Fixierung der Paarung Aufnehmer/Formwerkzeug zueinander erfolgen können.

Eine bevorzugte Ausführung der Distanzeinrichtung ist mit wenigstens einer in Preßrichtung verlaufenden Anschlagplatte od. dgl. Einsatz versehen, deren/dessen quer zur Preßrichtung angeordnete Kanten Anschläge für das Formwerkzeug und den Aufnehmer bilden. Insbesondere sollen zwei Anschlagplatten durch zumindest eine Jochplatte verbunden und mit dieser an ein bewegbares Gestänge od. dgl. Antriebseinrichtung angeschlossen sein, wobei dann die Anschlagplatten die Trenneinrichtung/en flankieren.

Diese Distanzeinrichtung ist gegenüber der Trenneinrichtung gesondert zu bewegen und wird vor ihr in den Spalt zwischen Aufnehmer und Formwerkzeug eingeführt, wonach der Aufnehmer an die Anschlagplatte/n herangefahren wird, bis diese anderseits dem Formwerkzeug anliegen. Einer mechanisch und manipulatorisch aufwendigen Verriegelung des Aufnehmers bedarf es so nicht mehr.

Ist eine aus der Voranmeldung bekannte Trenneinrichtung mit zwei in Abstand zueinander verlaufenden Scherklingen vorgesehen, so entspricht die Breite der Anschlagplatten etwa der Breite der die beiden Scherklingen enthaltenden Trenneinrichtung, d. h. letztere ist um beispielsweise 1 mm schmaler als jene Anschlagplatte/n, um ausreichend Spiel für die Scherklingen bzw. den Schervorgang zu haben; Distanzeinrichtung und Trenneinrichtung sind voneinander unabhängig zu bewegen, da sich letztere zum Abscheren in der dann stationären Distanzeinrichtung unbehindert verfahren werden soll.

Diese Unabhängigkeit der Trenneinrichtung von der Distanzeinrichtung gilt auch für eine andere Ausgestaltung letzterer; diese ist als -- zumindest einends offenes -- Rinnenprofil ausgebildet, dessen Schenkel einerseits sowie dessen Rinnenboden anderseits Anschläge für das Formwerkzeug und den Aufnehmer bilden, wobei die Schenkel querschnittlich parallel zur Preßrichtung verlaufen und in Betriebs- oder Scherstellung beidseits des Preßrestes stehen; in dieser Betriebsstellung der Anordnung Aufnehmer-Rinnenprofil-Formwerkzeug befindet sich vor dem Abscheren der -nicht immer ganz flache -- Preßrest vorteilhafterweise im Profilinnenraum, so daß die Außenfläche des Rinnenbodens dem Bolzen bzw. dessen Stirnscheibe zugekehrt ist.

So hat es sich als günstig erwiesen, im Rinnenboden außenseitig eine Einformung zur Aufnahme der in Preßrichtung weisenden Stirnscheibe des Barrens vorzusehen. Üblicherweise genügt für diese Einformung eine Tiefe von etwa 10 mm.

Um das Einführen der Scherklingen in den Profilinnenraum und die Einformung zu ermöglichen, ist diesen jeweils ein Durchlaß für eine Scherklinge der Trenneinrichtung zugeordnet, und beide Durchlässe liegen einander an Längskanten des Rinnenprofils gegenüber, sind also zueinander gleich gerichtet.

Bei der Trenneinrichtung mit zwei in Abstand zueinander verlaufenden Scherklingen sind diese von unterschiedlicher Länge, um das Eintauchen in Preßrest und Stirnscheibe zeitlich zu versetzen. Dazu soll bevorzugt die dem Formwerkzeug zugeordnete Scherklinge länger sein als die dem Aufnehmer nahe Scherklinge.

Die dem Werkzeug in Preßrichtung vorgeordnete Vorkammer zum Verpressen eines Aluminiumblokkes mit dessen sog. Spreadern erweitert sich erfindungsgemäß vom Durchmesser der Rezipientenbohrung weg zum Formquerschnitt hin in zumindest einer in Preßrichtung verlaufenden Ebene, die von einer diese Preßrichtung querenden Achse bestimmt wird.

Bei einer Ausführung dieser Vorkammer verjüngt sich deren Querschnitt in Preßrichtung beidseits einer anderen Achse, welche die vorstehend genannte kreuzt. In diesem Bereich vermindert sich also der Materialbedarf beim Pressen gegenüber dem Angebot des Barrens; das hier überschüssige Material wird zur anderen Achse gelenkt.

Als besonders günstig hat es sich erwiesen, die beiden Achsen zueinander rechtwinkelig zu stellen und als Symmetrielinien einzusetzen; hierdurch wird die erörterte Materialverteilung vergleichmäßigt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: eine Schrägsicht auf einen Teil einer Strangpresse mit einem horizontal verlaufenden Preßstempel;
- Fig. 2:: einen vergrößerten Ausschnitt aus Fig. 1;
- Fig. 3:: einen Längsschnitt durch einen skizzenhaft dargestellten Aufnehmer der Strangpresse mit in Preßrichtung in Abstand vorgeordnetem Preßstempel und nachfolgendem Formwerkzeug;
- Fig. 4, 5:: der Fig. 3 entsprechende Darstellungen unterschiedlicher Stellungen von Aufnehmer und Preßstempel;
- Fig. 6,8,9:: unterschiedliche Ausführungen von zwischen Aufnehmer und Formwerkzeug angeordneten Trenneinrichtungen;
- Fig. 7:: die Trenneinrichtung der Fig. 8 in vergrößerter Seitenansicht;
- Fig. 10:: eine Schrägsicht auf ein Doppelschermesser mit Distanzhalterung für Aufnehmer und Formwerkzeug;

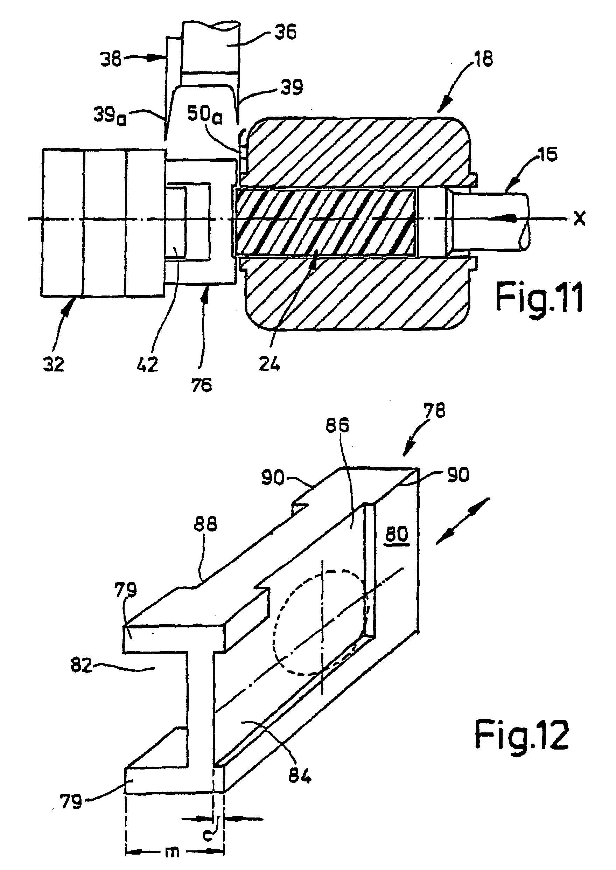

- Fig. 11:: eine der Fig. 8 entsprechende Darstellung von Aufnehmer und Formwerkzeug mit einer anderen dazwischen angeordneter Distanzhalterung;
- Fig. 12:: die Distanzhalterung der Fig. 11 in vergrößerter Schrägsicht;
- Fig. 13:: einen Teil einervergrößerten Seitenansicht eines Werkzeuges mit Vorkammer für das Strangpressen nach der sog. Spreadertechnologie;
- Fig. 14:: eine Skizze zu der in Preßrichtung gesehenen Vorkammer samt Formquerschnitt;
- Fig. 15,16:: Querschnitte durch die Vorkammer gemäß Linie Q bzw. Linie M in Fig. 14;
- Fig. 17:: skizzenhaft die theoretische Hüllfläche für den Materialfluß im Werkzeug.

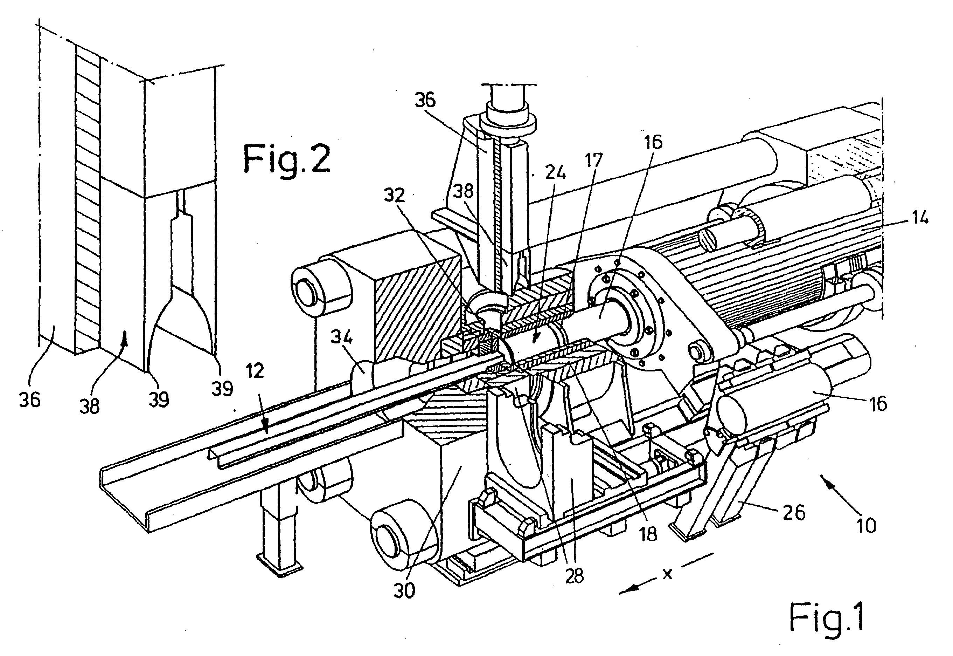

Eine Strangpresse 10 zum direkten Strangpressen von Profilen 12 weist gemäß Fig. 1 an einem Preßzylinder 14 einen Preßstempel 16 auf, der in der Längsachse A einer einen Rezipienten oder Aufnehmer 18 durchsetzenden Bohrung 19 verläuft. Der Durchmesser d einer Preßscheibe 17 an der freien Stirnfläche des Preßstempels 16 ist geringfügig kürzer als der freie Bohrungsdurchmesser d₁, so daß der Preßstempel 16 in die sog. Rezipientenbohrung einzutauchen vermag. Der erwähnte freie Bohrungsdurchmesser d₁ wird von der Innenfläche 20 einer in den Aufnehmer 18 bzw. dessen Bohrung 19 eingesetzten Rezipientenbüchse 21 begrenzt. Folgend wird der Innenraum dieser Rezipientenbüchse 21 als Rezipientenbohrung 22 bezeichnet.

Der maximale Abstand zwischen einer stempelseitigen Rezipientenfront 23 und der Preßscheibe 17 in -- nicht dargestellter -- Ruhelage des Preßstempels 16 ist so bemessen, daß der Rezipientenbohrung 22 ein bei 24 angedeuteter Block oder Barren aus Leichtmetall, insbesondere aus einer vorgewärmten Aluminiumlegierung, durch einen Ladeschlitten 26 vorgesetzt und vom Preßstempel 16 in Preßrichtung x in die Rezipientenbohrung 22 eingeschoben werden kann.

Nahe einer dem Preßstempel 16 fernliegenden Rezipientenstirn 23ₐ ruht in einem Matrizenhalter 28 an einem Querhaupt 30 eine Matrize als Formwerkzeug 32. Dieser folgt in Preßrichtung x ein Austragskanal 34 des Querhauptes 30, durch den das in einem Formquerschnitt 31 der Matrize 32 entstehende Profil 12 entfernt wird.

Oberhalb der Rezipientenstirn 23ₐ ist in Fig. 1 eine Hubeinrichtung 36 für ein Schermesser 38 zu erkennen, das radial zu einem Spalt 40 zwischen Aufnehmer 18 und Formwerkzeug 32 bewegbar vorgesehen ist.

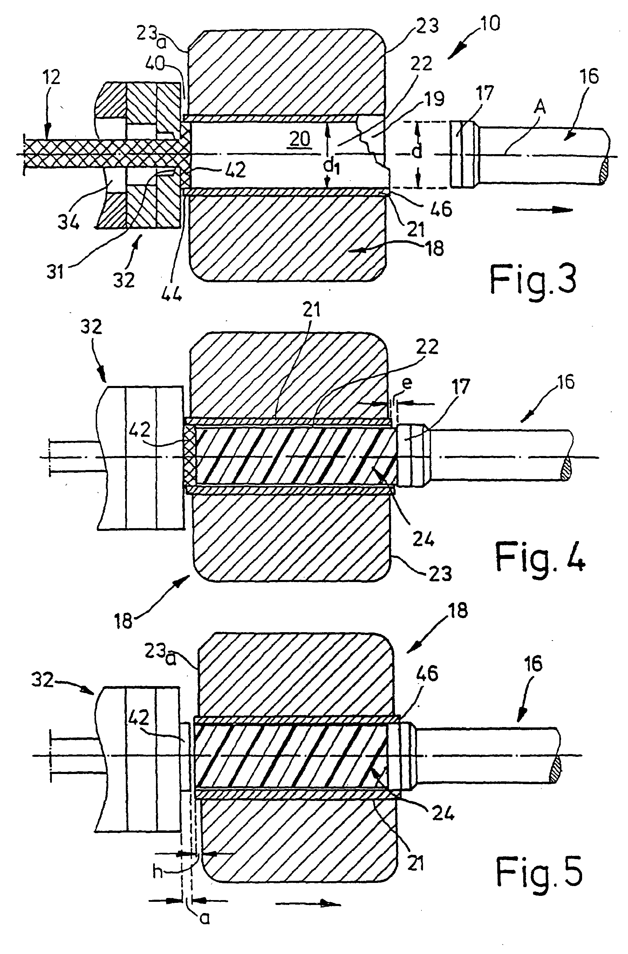

In der in Fig. 3 skizzierten Betriebsstellung am Ende eines Preßvorgangs findet sich am stempelfernen Ende der Rezipientenbohrung 22 an der dieser zugekehrten Werkzeugfläche 33 ein sog. Preßrest 42, von dem sich die Preßscheibe 17 entfernt hat. Die Werkzeugfläche 33 bleibt dank eines vom Überstand der Rezipientenbüchse 21 gebildeten Mündungskragens 44 in Abstand zur Rezipientenstirn 23ₐ. Auch an der hinteren Rezipientenfront 23 umgibt die Rezipientenbohrung 22 ein Ringkragen 46 als Überstand der Rezipientenbüchse 21.

Beim Einschieben eines neuen Barrens 24 nähert sich das freie Barrenende dem Preßrest 42 einer beispielsweisen Dicke a von 80 mm. Der heckwärtige Barrenüberstand e beträgt höchstens 20 mm.

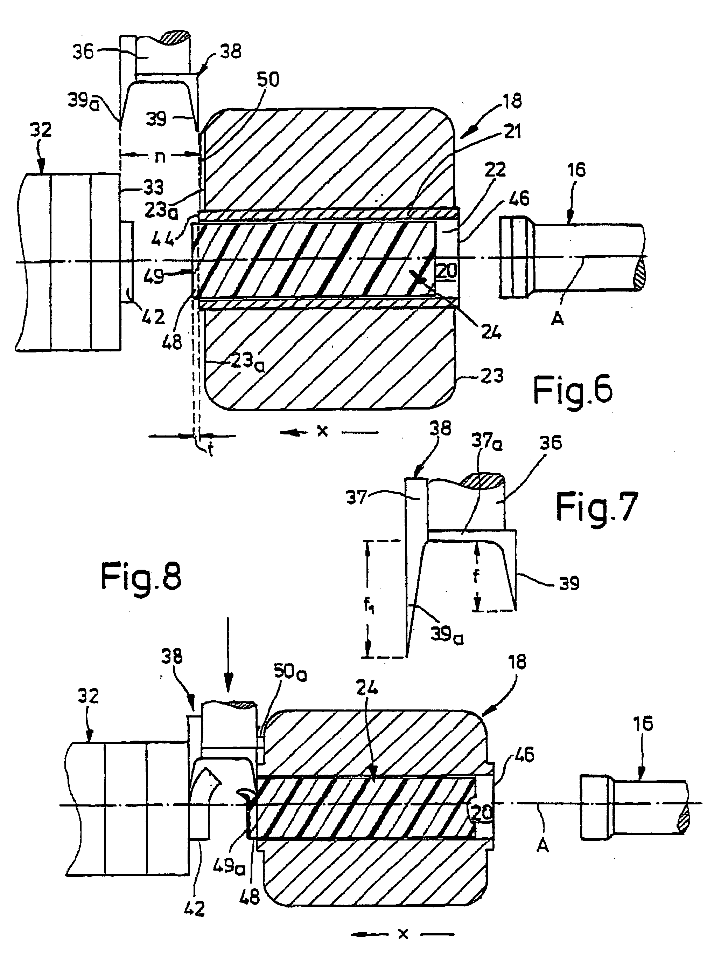

Nunmehr wird der Rezipient oder Aufnehmer 18 -- beispielsweise um mehr als 450 mm -- soweit zurückgefahren, bis der Preßrest 42 freisteht (Fig. 5). Ragt der Barren 24 gemäß Fig. 6 in einer Kraglänge t von etwa 10 mm über den Mündungskragen 44 hinaus, wird der Barren 24 mit dem Preßstempel 16 angestaucht; der Barren 24 soll bei einem noch zu beschreibenden nachfolgenden Schervorgang nicht durch das Schermesser 38 verschoben werden können.

Vor dem Schervorgang wird der Aufnehmer 18 gegen die Preßrichtung x zurückgefahren, bis die hintere Werkzeugfläche 33 des Formwerkzeuges bzw. der Matrize 32 in einem Abstand n zur Rezipientenstirn 23ₐ steht. In dieser Stellung werden Aufnehmer 18 und Matrize 32 zeitweilig fixiert.

Durch Absenken zweier in Fig. 6 bei 39, 39ₐ angedeuteter Scherklingen des Schermessers 38 werden gleichzeitig der Preßrest 42 und eine -- vom erwähnten Überstand der Kraglänge t des Barrens 24 bestimmte -- Stirnscheibe 48 des Barrens 24 -- und damit dessen in Preßrichtung x weisende Stirnfläche 49 -- entfernt; an der Barrenstirnfläche 49 hat sich vor den hier erörterten Vorgängen eine Oxidschicht gebildet, die in Fig. 8 mit 49ₐ bezeichnet ist und deren Oxidpartikel bei Übernahme in das entstehende Profil 12 störende Verunreinigungen erzeugen würden.

Um eine genaue Führung des Schermessers 38 zu gewährleisten, sind an der Rezipientenstirn 23ₐ oberhalb des Mündungskragens 44 diesen schützende vertikale Führungsleisten 50 als Messerabweiser angebracht. Deren Tiefe entspricht der Höhe h des Mündungskragens 44 (Fig. 5).

Das bevorzugt aus einer dem Formwerkzeug 32 nahen Klingenplatte 37 und einem an dieser festliegenden Klingenwinkel 37ₐ bestehende Doppel schermesser 38 bietet in Fig. 7,8 Scherklingen 39,39ₐ unterschiedlicher Längen f,f₁ an; die für den Preßrest 42 bestimmte Scherklinge 39ₐ der Klingenplatte 37 ist länger als das dem Aufnehmer 18 zugeordnete Schabmesser 39. Letzteres gleitet in Fig. 8 an einer Abweiserleiste 50ₐ entlang.

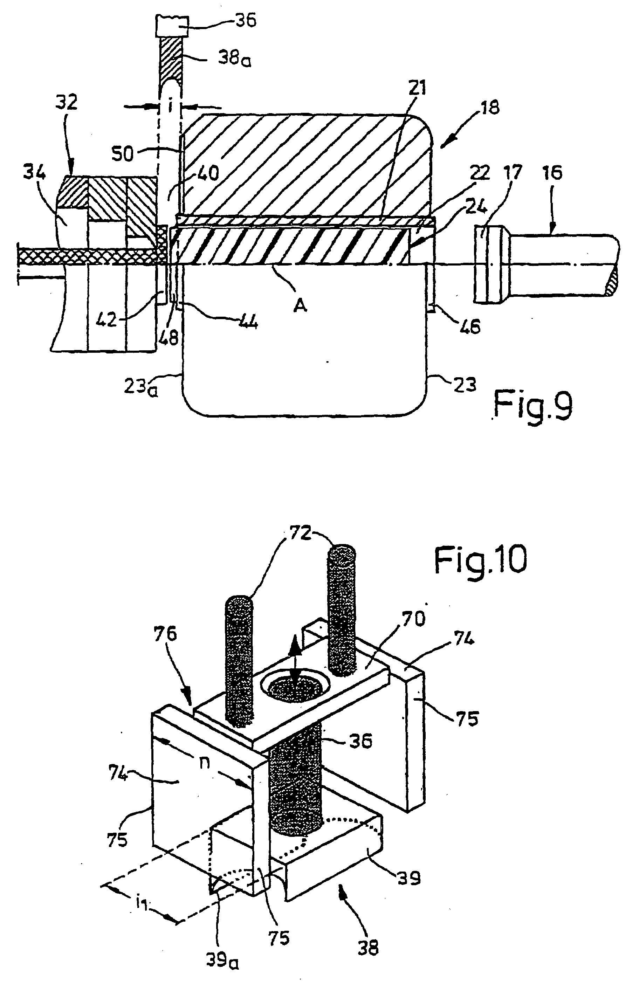

Beim Ausführungsbeispiel der Fig. 9 bleiben Preßrest 42 und Barrenstirnfläche 49 einander eng benachbart, so daß die Breite i des Schermessers 38ₐ sehr klein gehalten werden kann. Hierbei entsteht ein äußerst kurzer Weg zwischen der neuen -- durch Entfernen der Stirnscheibe 48 entstandenen - - oxidschichtfreien Barrenstirn und dem gleichzeitig vom Preßrest 42 befreiten Profilende.

Nach dem Schervorgang wird der Aufnehmer 18 wieder an die Matrize bzw. das Formwerkzeug 32 gefahren - der Preßvorgang kann von neuem beginnen.

Fig. 10 zeigt ein Doppelschermesser 38 der Breite i₁, dessen Hubstange 36 eine rechteckige Jochplatte 70 mit Spiel durchsetzt, die ihrerseits an einem Hubgestänge 72 festliegt und beidends jeweils eine Anschlag- oder Distanzplatte 74 der Breite m trägt; letztere ist geringfügig größer als die Breite i₁ des Doppelschermessers 38. Diese Distanzeinrichtung 76 aus Jochplatte 70, Hubgestänge 72 und Distanzplatte 74 wird in den Spalt 40 zwischen Aufnehmer 18 und Matrize 32 abgesenkt, um deren wirksamen Abstand n voneinander zu bestimmen, wobei ihre die Preßrichtung x querenden Längskanten 75 Anschläge bilden. Distanzeinrichtung 76 und Doppelschermesser 38 sind durch nicht dargestellte Antriebe voneinander getrennt auf- und abbewegbar.

Ebenfalls zum Festlegen jenes Abstandes n bzw. der Spaltweite des Spaltes 40 dient ein beidends offenes Rinnenprofil 78 als Positionieranschlag, das beispielsweise von der Seite her eingeschoben wird. Das Rinnenprofil 78 bestimmt mit der Querschnittslänge m seiner Schenkel 79 die erwähnte Spaltweite n.

Die Schenkel 79 flankieren in Betriebsstellung den Preßrest 42, der dann in dem -- anderseits vom Profilboden 80 begrenzten -- Profilinnen- oder Rinnenraum 82 steht. Zum Aufnehmer 18 hin ist in den Profilboden 80 eine flache Einformung oder Ausnehmung 84 einer Tiefe c von etwa 10 mm bis 15 mm für die Stirnscheibe 48 eingeformt. Die Einformung 84 ist zur Scherklinge 39 hin offen, damit diese durch den als Randschlitz ausgebildeten Zugang 86 auf die Stirnscheibe 48 abgesenkt werden kann. Auch der Profilinnenraum 82 ist bei 88 mit einem Zugang für die -- andere -- Scherklinge 39ₐ ausgestattet. Beide Zugänge 86,88 liegen an den aufwärts weisenden Längskanten 90 des Rinnenprofils 78 einander gegenüber.

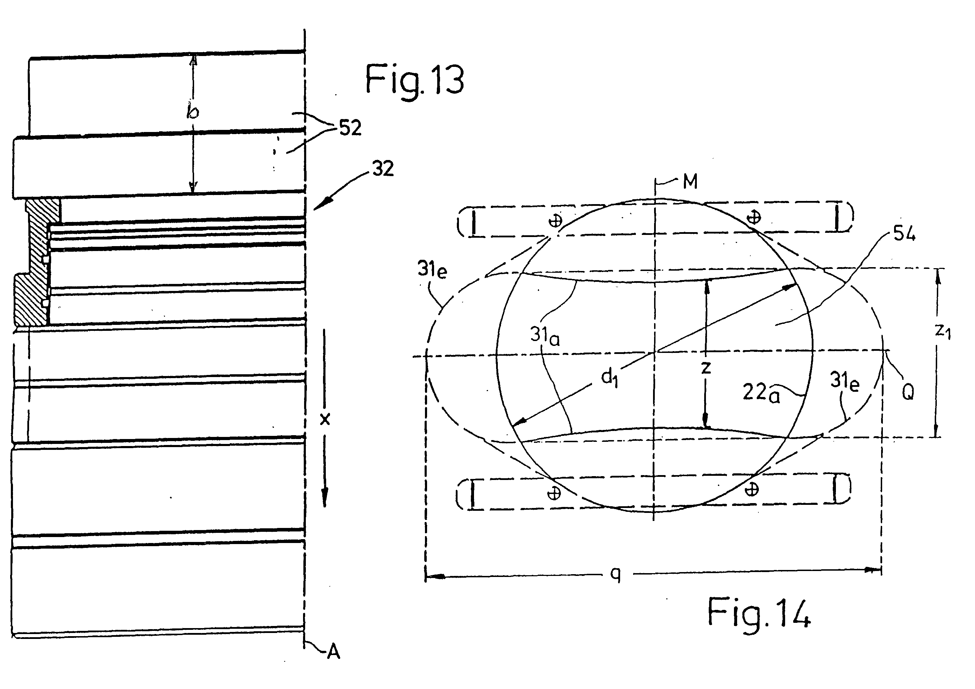

Der Matrize 32 nach dem Ausführungsbeispiel der Fig. 13 ist in Preßrichtung x ein Werkzeugteller 52 der Achslänge b von 270 mm mit einer Vorkammer 54 vorgesetzt; in dieser wird das duktile Barrenmaterial dem hier schlitzartigen Formquerschnitt 31 zugeführt, dessen horizontale Längserstreckung q mit beispielsweise 750 mm erheblich größer ist als der Bohrungsdurchmesser d₁ von 520 mm. Die Höhe z des Formquerschnitts 31 in dessen eine Mittelebene in Preßrichtung x bestimmender vertikaler Mittelachse M mißt lediglich 240 mm. Von der -- wie auch die Querachse Q einer Querachse zu ihr -- eine Symmetriegerade darstellenden Mittelachse M erweitert sich der Formquerschnitt 31 nach beiden Seiten auf 280 mm als längster Höhe z₁. Letztere ist in Fig. 14 von den beiden Schnittpunkten der Längskonturen 31ₐ des Formquerschnitts 31 mit der Kontur 22ₐ der Rezipientenbohrung 22 bestimmt. Außerhalb deren ist die Endkontur 31ₑ des Formquerschnitts 31 teilkreisförmig.

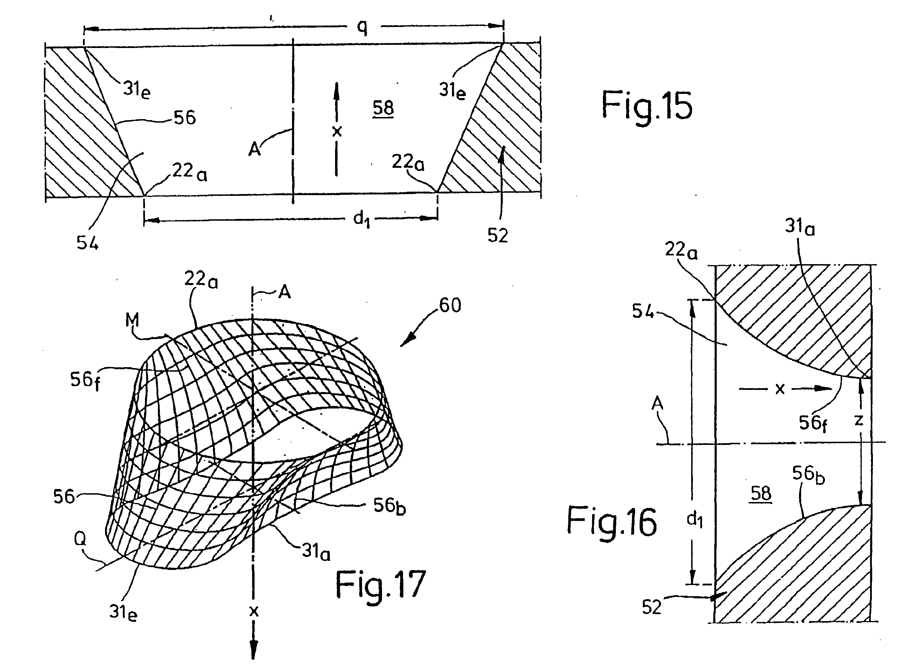

Die seitliche Kontur 56 der Kammerwandung 58 ist nach Fig. 15 eine die Kontur 22ₐ der Rezipientenbohrung 22 verbindende Gerade, die teilkreisförmig gekrümmte Bodenkontur 56_{b} und die gegenläufig gekrümmte Firstkontur 56_{f} begrenzen gemäß Fig. 16 einen sich zum Formquerschnitt 31 hin verjüngenden Trichter. Die dreidimensionale Form der Kammerwandung 58 wird durch eine in Fig. 17 vorgestellte Hüllfläche 60 deutlich.

Die Erzeugung von großen, breiten Profilen 12 aus einer verhältnismäßig engen Rezipientenbohrung 22 wird mittels der sog. Spreadertechnologie durchgeführt. Mit letzterer können für Rechteckrezipienten ausgelegte Werkzeuge 32 dank der Vorkammer 54 aus Rundrezipienten oder-aufnehmern 18 gefertigt werden.

## Patentansprüche

1. Verfahren zum Strangpressen eines Profiles (12) od.dgl. Körpers aus einem Barren (24), der in einer Rezipientenbohrung (22) eines Aufnehmers (18) geführt und mittels eines Preßstempels (16) in Preßrichtung (x) durch einen Formquerschnitt (31) eines Formwerkzeuges (32) gepreßt wird,
**dadurch gekennzeichnet,**
**daß** vor Eintritt des Barrens (24) in den Formquerschnitt (31) der Barren (24) in Preßrichtung (x) um ein Kragmaß (t) aus dem Aufnehmer (18) geschoben wird, wonach ein dabei entstehender scheibenartiger Abschnitt (48) des freien Barrenendes abgeschert und entfernt sowie letzteres anschließend an den Formquerschnitt (31) gebracht wird.

2. Verfahren nach Anspruch 1, **dadurch gekennzeichnet, daß** ein an der gegen die Preßrichtung (x) weisenden Werkzeugfläche eines voraufgegangenen Barrens (24) verbleibender Preßrest (42) abgeschert wird, und daß der Preßrest (42) und der scheibenartige Abschnitt (48) des freien Barrenendes zeitgleich abgeschert werden.

3. Verfahren nach Anspruch 1 oder 2, **dadurch gekennzeichnet, daß** der Anschluß des Barrenendes an das Profilende im Formquerschnitt (31) unmittelbar nach dem Abschervorgang durchgeführt wird.

4. Verfahren nach einem der Ansprüche 1 bis 3, **dadurch gekennzeichnet, daß** vor dem Abschervorgang Aufnehmer (18) und Formwerkzeug (32) relativ axial voneinander wegbewegt sowie in vorgegebenem Abstand (n) ihrer benachbarten Stirnflächen (33, 23ₐ) zueinander zeitweilig fixiert werden.

5. Verfahren nach einem der Ansprüche 1 bis 4, **dadurch gekennzeichnet, daß** das Barrenende vor dem Eintritt in den Formquerschnitt (31) zu diesem hin verformt wird.

6. Verfahren nach Anspruch 5, **dadurch gekennzeichnet, daß** das Barrenende vor dem Eintreten in den Formquerschnitt (31) in wenigstens einer in Preßrichtung (x) verlaufenden Ebene erweitert sowie in zumindest einer die erste Ebene querenden weiteren in Preßrichtung verlaufenden Ebene verjüngt wird.

7. Vorrichtung zum Strangpressen eines Profiles (12) od.dgl. Körpers aus einem Barren (24), der in einer Rezipientenbohrung (22) eines Aufnehmers (18) geführt und mittels eines Preßstempels (16) in Pressrichtung (x) einem Formquerschnitt (31) eines Formwerkzeuges (32) zugeführt wird, mit einer quer zur Pressrichtung (x) bewegbaren Trenneinrichtung (38) zur Durchführung des Verfahrens nach einem der Ansprüche 1 bis 5, **dadurch gekennzeichnet, dass** an der dem Formwerkzeug (32) zugekehrten Rezipientenstirn (23ₐ) des Aufnehmers (18) als Trenneinrichtung ein Schermesser (38, 38ₐ) mit zwei Scherklingen (39) vorgesehen ist, von denen eine quer über die Mündung der Rezipientenbohrung (22) sowie die andere Scherklinge (39ₐ) über die Stirnfläche (33) des Formwerkzeuges (32) führbar ist.

8. Vorrichtung mit relativ zueinander axial beweglichen Formwerkzeug (32) und Aufnehmer (18) nach Anspruch 7, **dadurch gekennzeichnet, daß** der Aufnehmer (18) mit seiner Rezipientenstirn (23a) an einer radialen Bewegungsbahn der Scherklinge (39) festlegbar sowie der Abstand (n) zwischen den benachbarten Stirnflächen (33, 23ₐ) von Formwerkzeug (32) und Aufnehmer (18) einstellbar und fixierbar ausgebildet ist.

9. Vorrichtung nach Anspruch 7 oder 8, **dadurch gekennzeichnet, daß** das Schermesser (38) zwei in Abstand (i) zueinander parallel verlaufende Scherklingen (39,39ₐ) aufweist.

10. Vorrichtung nach Anspruch 9, **dadurch gekennzeichnet, daß** der Abstand (i) zwischen den Scherklingen (39,39ₐ) verstellbar ausgebildet ist.

11. Vorrichtung nach einem der Ansprüche 7 bis 10, **gekennzeichnet durch** wenigstens ein an der Rezipientenstirn (23ₐ) angeordnetes Führungsorgan (50) für das Schermesser (38).

12. Vorrichtung nach einem der Ansprüche 9 bis 11, **dadurch gekennzeichnet, daß** die Scherklingen (39,39ₐ) von unterschiedlicher Länge (f,f₁) sind, wobei gegebenenfalls die dem Formwerkzeug (32) zugeordnete Scherklinge (39ₐ) länger ist als die dem Aufnehmer (18) nahe Scherklinge (39).

13. Vorrichtung nach einem der Ansprüche 7 bis 12, **dadurch gekennzeichnet, daß** dem Spalt (40) zwischen Formwerkzeug (32) und Aufnehmer (18) eine quer zur Preßrichtung (x) in den Spalt einfahrbare sowie rückstellbare Distanzeinrichtung (76,78) zugeordnet ist, an die Formwerkzeug und Aufnehmer anlegbar sind.

14. Vorrichtung nach Anspruch 13, **dadurch gekennzeichnet, daß** die Distanzeinrichtung (76) wenigstens eine in Preßrichtung (x) verlaufende Anschlagplatte (74) aufweist, deren quer zur Preßrichtung angeordnete Kanten (75) Anschläge für das Formwerkzeug (32) und den Aufnehmer (18) bilden, wobei gegebenenfalls zwei die Trenneinrichtung/en (38,38ₐ bzw. 39,39ₐ) flankierende Anschlagplatten (74) durch zumindest eine Jochplatte (70) verbunden und mit dieser an ein bewegbares Gestänge (72) od. dgl. Antriebseinrichtung angeschlossen sind.

15. Vorrichtung nach Anspruch 14, **dadurch gekennzeichnet, daß** die Breite (m) der Anschlagplatten (74) etwa der Breite (i₁) der zwei Scherklingen (39,39ₐ) enthaltenden Trenneinrichtung (38,38ₐ) entspricht, wobei gegebenenfalls das Antriebsgestänge (36) der Trenneinrichtung die Jochplatte (70) mit Spiel durchsetzt.

16. Vorrichtung nach einem der Ansprüche 13 bis 15, **dadurch gekennzeichnet, daß** die Distanzeinrichtung (76) und die Trenneinrichtung (38,38ₐ) voneinander unabhängig bewegbar sind.

17. Vorrichtung nach Anspruch 13, **dadurch gekennzeichnet, daß** die Schenkel (79) eines zumindest einends offenen Rinnenprofils (78) einerseits sowie dessen Rinnenboden (80) anderseits Anschläge für das Formwerkzeug (32) und den Aufnehmer (18) bilden, wobei die Schenkel querschnittlich parallel zur Preßrichtung (x) verlaufen.

18. Vorrichtung nach Anspruch 13 oder 17, **dadurch gekennzeichnet, daß** die Schenkel (79) des Rinnenprofils (78) in dessen Betriebsstellung beidseits des Preßrestes (42) am Formwerkzeug (32) anschlagen.

19. Vorrichtung nach Anspruch 17 oder 18, **dadurch gekennzeichnet, daß** der Rinnenboden (80) außenseitig eine Einformung (84) zur Aufnahme einer in Preßrichtung (x) weisenden Stirnscheibe (48) des Barrens (24) enthält und die einends offene Einformung (84) gegebenenfalls parallel zum Profilinnenraum (82) zu einem offenen Ende des Rinnenprofils (78) hin verläuft.

20. Vorrichtung nach einem der Ansprüche 17 bis 19, **dadurch gekennzeichnet, daß** am Profilinnenraum (82) sowie an der Einformung (84) jeweils ein Zugang oder Durchlaß (88,86) für die gesondert bewegbare Trenneinrichtung (38,38ₐ) vorgesehen ist und beide Durchlässe an Längskanten (90) des Rinnenprofils (78) einander gegenüberliegen sowie zueinander gleich gerichtet sind.

21. Vorrichtung nach einem der Ansprüche 11 bis 20, **gekennzeichnet durch** einen von der Rezipientenstirn (23ₐ) abragenden Mündungskragen (44) einer die Rezipientenbohrung (22) begrenzender Rezipientenbüchse (21), wobei die Front der/des Führungsorgane/s (50) mit der Kante des Mündungskragens (44) etwa fluchtet.

22. Vorrichtung nach wenigstens einem der Ansprüche 7 bis 21, **dadurch gekennzeichnet, daß** zwischen Aufnehmer (18) und Formwerkzeug (32) diesem eine Vorkammer (54) zugeordnet ist, die sich vom Durchmesser (d₁) der Rezipientenbohrung (22) zum Formquerschnitt (31) hin zumindest in einer in Preßrichtung (x) verlaufenden Ebene (Q) erweitert, wobei sich gegebenenfalls der Querschnitt der Vorkammer (54) in einer die Ebene (Q) querenden Mittelebene (M) in Preßrichtung (x) verjüngt.

23. Vorrichtung nach Anspruch 22, **dadurch gekennzeichnet, daß** die Mittelebene (M) in der Längsachse (A) der Rezipientenbohrung (22) die Querebene (Q) rechtwinkelig durchdringt und beide Ebenen Symmetrieebenen für die Wandung (58) der Vorkammer (54) bilden.

## Claims

1. Method of extruding a section (12) or similar body from a bar (24) which is guided in a container bore (22) in a receiver (18) and is pressed in the extrusion direction (x) through a shaped cross section (31) of a shaped die (32) by means of an extrusion stem (16), **characterised in that**, before the bar (24) enters the shaped cross section (31), the bar (24) is pushed out of the receiver (18) in the extrusion direction (x) by a projecting amount (t), after which a resulting disc-shaped portion (48) of the free end of the bar is sheared off and removed and the free end of the bar is then brought to the shaped cross section (31).

2. Method according to claim 1, **characterised in that** discard (42) remaining on the die surface of a previous bar (24) facing in the opposite direction to the extrusion direction (x) is sheared off and that the discard (42) and the disc-shaped portion (48) of the free end of the bar are sheared off at the same time.

3. Method according to claim 1 or claim 2, **characterised in that** the end of the bar is connected to the end of the section in the shaped cross section (31) immediately after the shearing process.

4. Method according to one of claims 1 to 3, **characterised in that**, before the shearing process, the receiver (18) and the shaped die (32) are moved axially away from one another and their adjacent end faces (33, 23ₐ) are temporarily fixed together at a predetermined distance (n) from one another.

5. Method according to one of claims 1 to 4, **characterised in that**, before it enters the shaped cross section (31), the end of the bar is deformed towards the latter.

6. Method according to claim 5, **characterised in that**, before it enters the shaped cross section (31), the end of the bar is widened in at least one plane extending in the extrusion direction (x) and narrowed in at least one further plane extending in the extrusion direction and traversing the first plane.

7. Device for extruding a section (12) or similar body from a bar (24) which is guided in a container bore (22) in a receiver (18) and is fed in the extrusion direction (x) to a shaped cross section (31) of a shaped die (32) by means of an extrusion stem (16), comprising a separating device (38) which can be moved transversely to the extrusion direction (x) for carrying out the method according to one of claims 1 to 5, **characterised in that** a shearing knife (38, 38ₐ) with two shearing blades (39) serving as a separating device is provided on the container end (23ₐ) of the receiver (18) directed towards the shaped die (32), wherein one shearing blade can be moved across the opening of the container bore (22) and the other shearing blade (39ₐ) can be moved over the end face (33) of the shaped die (32).

8. Device comprising a shaped die (32) and a receiver (18) which can move axially relative to one another according to claim 7, **characterised in that** the receiver (18) can be secured by means of its container end (23ₐ) to a radial path of motion of the shearing blade (39) and the distance (n) between the adjacent end faces (33, 23ₐ) of the shaped die (32) and the receiver (18) can be adjusted and fixed.

9. Device according to claim 7 or claim 8, **characterised in that** the shearing knife (38) has two shearing blades (39, 39ₐ) extending in parallel at a distance (i) from one another.

10. Device according to claim 9, **characterised in that** the distance (i) between the shearing blades (39, 39ₐ) is adjustable.

11. Device according to one of claims 7 to 10, **characterised by** at least one guide member (50) for the shearing knife (38) arranged on the end (23ₐ) of the container.

12. Device according to one of claims 9 to 11, **characterised in that** the shearing blades (39, 39ₐ) are of different lengths (f, f₁), the shearing blade (39ₐ) associated with the shaped die (32) possibly being longer than the shearing blade (39) close to the receiver (18).

13. Device according to one of claims 7 to 12, **characterised in that** a spacer means (76, 78) is associated with the gap (40) between the shaped die (32) and the receiver (18) and can be moved in and out of the gap transversely to the extrusion direction (x), wherein the shaped die and the receiver can be laid against this spacer means.

14. Device according to claim 13, **characterised in that** the spacer means (76) has at least one stop plate (74) extending in the extrusion direction (x), the edges (75) of which arranged transversely to the extrusion direction form stops for the shaped die (32) and the receiver (18), two stop plates (74) flanking the separating device(s) (38, 38ₐ and 39, 39ₐ) possibly being connected together by means of at least one yoke plate (70) and being connected together with the latter to a movable linkage (72) or similar driving device.

15. Device according to claim 14, **characterised in that** the width (m) of the stop plates (74) corresponds approximately to the width (i₁) of the separating device (38, 38ₐ) containing two shearing blades (39, 39ₐ), the driving linkage (36) of the separating device possibly traversing the yoke plate (70) with play.

16. Device according to one of claims 13 to 15, **characterised in that** the spacer means (76) and the separating device (38, 38ₐ) can move independently of one another.

17. Device according to claim 13, **characterised in that**, on the one hand, the arms (79) of a channel-shaped section (78) open at least at one end and, on the other hand, the bottom (80) of the channel form stops for the shaped die (32) and the receiver (18), the arms extending parallel to the extrusion direction (x) as viewed in cross section.

18. Device according to claim 13 or claim 17, **characterised in that** the arms (79) of the channel-shaped section (78) strike the shaped die (32) on either side of the discard (42) in the operating position.

19. Device according to claim 17 or claim 18, **characterised in that** the bottom (80) of the channel is provided on its exterior with a recess (84) for receiving an end disc (48) of the bar (24) facing in the extrusion direction (x) and the recess (84) open at one end possibly extends towards one open end of the channel-shaped section (78) parallel to the interior (82) of the section.

20. Device according to one of claims 17 to 19, **characterised in that** respective access openings (88, 86) are provided for the independently movable separating device (38, 38ₐ) on the interior (82) of the section and on the recess (84) and the two access openings are situated opposite one another in parallel on longitudinal edges (90) of the channel-shaped section (78).

21. Device according to one of claims 11 to 20, **characterised by** an opening collar (44) of a container bushing (21) delimiting the container bore (22) projecting from the end (23ₐ) of the container, the front of the guide member(s) (50) being approximately flush with the edge of the opening collar (44).

22. Device according to at least one of claims 7 to 21, **characterised in that** a die recess (54) associated with the shaped die (32) is arranged between the receiver (18) and the shaped die and widens from the diameter (d₁) of the container bore (22) towards the shaped cross section (31) at least in a plane (Q) extending in the extrusion direction (x), the cross section of the die recess (54) possibly narrowing in the extrusion direction (x) in a centre plane (M) traversing the plane (Q).

23. Device according to claim 22, **characterised in that** the centre plane (M) passes through the transverse plane (Q) at a right angle along the longitudinal axis (A) of the container bore (22) and the two planes form planes of symmetry for the wall (58) of the die recess (54).

## Revendications

1. Procédé d'extrusion d'un profilé (12) ou d'un corps similaire à partir d'une barre (24) qui est guidée dans un alésage (22) du réceptacle d'un dispositif de réception (18) et qui est extrudée à travers une section transversale de formage (31) d'un outil de formage (32) au moyen d'un poussoir d'extrusion (16) avançant dans la direction d'extrusion (x),
**caractérisé en ce qu'**avant l'entrée de la barre (24) dans la section transversale de formage (31), la barre (24) est repoussée hors du dispositif de réception (18) dans la direction d'extrusion (x) sur une distance de porte-à-faux (t), suite à quoi une partie (48) en forme de disque ainsi formée à l'extrémité libre de la barre est cisaillée et enlevée, et cette extrémité libre est ensuite amenée contre la section transversale de formage (31).

2. Procédé selon la revendication 1, **caractérisé en ce qu'**un résidu d'extrusion (42) d'une barre (24) précédente restant sur la surface de l'outil tournée dans la direction opposée à la direction d'extrusion (x) est cisaillé, et **en ce que** le résidu d'extrusion (42) et la partie (48) en forme de disque de l'extrémité libre de la barre sont cisaillés en même temps.

3. Procédé selon la revendication 1 ou 2, **caractérisé en ce** le raccord de l'extrémité de la barre à l'extrémité du profilé dans la section transversale de formage (31) est réalisé immédiatement après l'opération de cisaillage.

4. Procédé selon l'une des revendications 1 à 3, **caractérisé en ce qu'**avant l'opération de cisaillage, le dispositif de réception (18) et l'outil de formage (32) sont écartés l'un de l'autre dans la direction axiale et sont momentanément immobilisé l'un par rapport à l'autre à une distance prédéterminée (n) entre leurs surfaces frontales voisines (33, 23ₐ).

5. Procédé selon l'une des revendications 1 à 4, **caractérisé en ce** l'extrémité de la barre est déformée pour s'adapter à la section transversale de formage (31) avant son entrée dans cette dernière.

6. Procédé selon la revendication 5, **caractérisé en ce qu'**avant son entrée dans la section transversale de formage (31), l'extrémité de la barre est évasée dans au moins un plan s'étendant dans la direction d'extrusion (x), et est rétrécie dans au moins un autre plan qui traverse le premier plan et s'étend dans la direction d'extrusion.

7. Dispositif pour l'extrusion d'un profilé (12) ou d'un corps similaire à partir d'une barre (24) qui est guidée dans un alésage de réceptacle (22) d'un dispositif de réception (18) et qui est amené à la section transversale de formage (31) d'un outil de formage (32) au moyen d'un poussoir d'extrusion (16) se déplaçant dans la direction d'extrusion (x), comportant un dispositif de séparation (38) déplaçable transversalement à la direction d'extrusion (x) en vue de la mise en oeuvre du procédé selon l'une des revendications 1 à 5, **caractérisé en ce que** sur le front (23ₐ) du réceptacle du dispositif de réception (18) tourné vers l'outil de formage (32), est prévu un couteau de cisaillage (38, 38ₐ) qui sert de dispositif de séparation et qui présente deux lames de cisaillage (39) dont l'une est guidée transversalement devant l'embouchure de l'alésage (22) du réceptacle et l'autre (39a) est guidée devant la surface frontale (33) de l'outil de formage (32).

8. Dispositif selon la revendication 7, comportant un outil de formage (32) et un dispositif de réception (18) mobile axialement l'un par rapport à l'autre, **caractérisé en ce que** le front (23ₐ) du réceptacle du dispositif de réception (18) est configuré de manière à pouvoir être immobilisé sur un parcours radial de déplacement de la lame de cisaillage (39), et **en ce que** l'écart (n) entre les surfaces frontales voisines (33, 23ₐ) de l'outil de formage (32) et du dispositif de réception (18) est configuré de manière à pouvoir être réglé et fixé.

9. Dispositif selon la revendication 7 ou 8, **caractérisé en ce que** le couteau de cisaillage (38) présente deux lames de cisaillage (39, 39ₐ) qui s'étendent parallèlement l'une à l'autre à une distance (i).

10. Dispositif selon la revendication 9, **caractérisé en ce que** l'écart (i) entre les lames de cisaillage (39, 39ₐ) est configuré de manière à pouvoir être ajustable.

11. Dispositif selon l'une des revendications 7 à 10, **caractérisé par** au moins un organe de guidage (50) du couteau de cisaillage (38) disposé sur le front (23ₐ) du réceptacle.

12. Dispositif selon l'une des revendications 9 à 11, **caractérisé en ce que** les lames de cisaillage (39, 39ₐ) sont de longueurs (f, f₁) différentes, et la lame de cisaillage (39ₐ) associée à l'outil de formage (32) est éventuellement plus longue que la lame de cisaillage (39) proche du dispositif de réception (18).

13. Dispositif selon l'une des revendications 7 à 12, **caractérisé en ce qu'**un dispositif d'écartement (76, 78) qui peut être inséré et retiré transversalement par rapport à la direction d'extrusion (x) dans l'interstice (40) situé entre l'outil de formage (32) et le dispositif de réception (18) est associé à cet interstice, et l'outil de formage et le dispositif de réception peuvent être placés contre ce dispositif d'écartement.

14. Dispositif selon la revendication 13, **caractérisé en ce que** le dispositif d'écartement (76) présente au moins une plaque de butée (74) qui s'étend dans la direction d'extrusion (x) et dont les bords (75) disposés transversalement à la direction d'extrusion forment des butées pour l'outil de formage (32) et le dispositif de réception (18), et éventuellement deux plaques de butée (74) flanquant le ou les dispositifs de séparation (38, 38ₐ ou 39, 39ₐ) sont reliées par au moins une plaque de joug (70) et sont raccordées par cette dernière à une tringlerie mobile (72) ou à un dispositif d'entraînement similaire.

15. Dispositif selon la revendication 14, **caractérisé en ce que** la largeur (m) des plaques de butée (74) correspond sensiblement à la largeur (il) du dispositif de séparation (38, 38ₐ) contenant deux lames de cisaillage (39, 39ₐ), et la tringlerie d'entraînement (36) du dispositif de séparation traverse éventuellement la plaque de joug (70) avec un jeu.

16. Dispositif selon l'une des revendications 13 à 15, **caractérisé en ce que** le dispositif d'écartement (76) et le dispositif de séparation (38, 38ₐ) peuvent être déplacés indépendamment l'un de l'autre.

17. Dispositif selon la revendication 13, **caractérisé en ce que** les ailes (79) d'un profilé en rigole (78), d'une part, et le fond (80) de la rigole, d'autre part, forment des butées pour l'outil de formage (32) et le dispositif de réception (18), les ailes s'étendant sensiblement en parallèle à la direction d'extrusion (x).

18. Dispositif selon la revendication 13 ou 17, **caractérisé en ce que** les ailes (79) du profilé (78) en rigole viennent buter contre l'outil de formage (32) des deux côtés du résidu d'extrusion (42) lorsqu'elles sont dans leur position de travail.

19. Dispositif selon la revendication 17 ou 18, **caractérisé en ce que** le fond (80) de la rainure contient du côté extérieur un creux (84) pour la réception d'un disque frontal (48) de la barre (24) tourné dans la direction d'extrusion (x), et le creux (84) ouvert à une extrémité s'étend éventuellement en parallèle à l'espace intérieur du profilé (82) vers une extrémité ouverte du profilé (78) en rigole.

20. Dispositif selon l'une des revendications 17 à 19, **caractérisé en ce qu'**un accès ou passage (88, 86) pour le dispositif de séparation (38, 38ₐ) apte à être déplacé séparément, est chaque fois prévu vers l'espace intérieur (82) du profilé et vers le creux (84), et les deux passages sont opposés l'un à l'autre sur les bords longitudinaux (90) du profilé (78) en rigole et sont orientés dans la même direction.

21. Dispositif selon l'une des revendications 11 à 20, **caractérisé par** un porte-à-faux d'embouchure (44) qui déborde du fond (23ₐ) du réceptacle, d'une douille de réceptacle (21) délimitant l'alésage (22) du réceptacle, le front du ou des organes de guidage (50) étant sensiblement alignés sur le bord du porte-à-faux (44) de l'embouchure.

22. Dispositif selon au moins l'une des revendications 7 à 21, **caractérisé en ce qu'**entre le dispositif de réception (18) et l'outil de formage (32), une préchambre (54) est associée à l'outil de formage, et s'élargit par rapport au diamètre (d₁) de l'alésage (22) du réceptacle en direction de la section transversale de formage (31), au moins dans un plan (Q) s'étendant dans la direction d'extrusion (x), et la section transversale de la préchambre (54) se rétrécit éventuellement dans un plan central (M) traversant le plan (Q) dans la direction d'extrusion (x).

23. Dispositif selon la revendication 22, **caractérisé en ce que** le plan central (M) passant par l'axe longitudinal (A) de l'alésage (22) du réceptacle traverse perpendiculairement le plan transversal (Q), et les deux plans forment des plans de symétrie pour la paroi (58) de la préchambre (54).
